# EUROPÄISCHE PATENTSCHRIFT

(11) **EP 1 398 220 B1**
(45) Veröffentlichungstag und Bekanntmachung des Hinweises auf die Patenterteilung: **16.02.2011**
(21) Anmeldenummer: 03020325.1
(22) Anmeldetag: 09.09.2003
(51) Int. Cl.: B60R 13/02, B60R 5/04, B60R 7/02

(54) **Fahrzeug mit Halteeinrichtungen für Zubehörteile**
Vehicle provided with accessory holding devices
Véhicule équipé de dispositifs de maintien d'accessoires

(30) Priorität: 10.09.2002 DE 10241925
(43) Veröffentlichungstag der Anmeldung: 17.03.2004
(73) Patentinhaber: GM Global Technology Operations, Inc., Detroit, MI 48265-3000 (US)
(72) Erfinder: Weber, Bernd, 64569 Nauheim (DE)
(74) Vertreter: Strauss, Peter

(56) Entgegenhaltungen:
- WO-A-02/02371
- PATENT ABSTRACTS OF JAPAN vol. 1995, no. 05, 30. Juni 1995 (1995-06-30) & JP 07 052722 A (NISSAN MOTOR CO LTD), 28. Februar 1995 (1995-02-28)
- PATENT ABSTRACTS OF JAPAN vol. 009, no. 223 (M-411), 10. September 1985 (1985-09-10) & JP 60 080944 A (NISSAN JIDOSHA KK), 8. Mai 1985 (1985-05-08)

## Beschreibung

Die Erfindung betrifft ein Fahrzeug mit einer Karosserie und einer Innenraumverkleidung, das Halteeinrichtungen für ein im Innenraum des Fahrzeugs befindliches Zubehörteil aufweist. Bei dem Fahrzeug handelt es sich insbesondere um ein Kraftfahrzeug, bei dem Zubehörteile wie beispielsweise Haken oder Netze zum Halten von Frachtgegenständen an einer oder mehreren Seitenwänden, Trennwände etc, in einem Laderaum befestigt werden können.

Die deutsche offenlegungsschrift DE 100 47 542 A1 offenbart einen Laderaum für ein Kraftfahrzeug mit mehreren längs- und querverlaufenden Schienen, die in Innenraumverkleidungen des Laderaumes zumindest teilweise räumlich integriert sind. Diese Schienen übernehmen Befestigungs- oder Haltefunktionen für im Laderaum positionierte Zubehörteile. Die Schienen können dazu mit Befestigungsrastern mit Stütz- oder Auflagefunktionen versehen sein und liegen an gegenüberliegenden Innenraumverkleidungen des Laderaumes paarweise gegenüber. Bei den Zubehörteilen handelt es sich um Trenn- oder Sicherungsgitter oder -netze für horizontalen oder vertikalen Einbau, die steife Rahmenelemente aufweisen, deren Enden in sich jeweils paarweise gegenüberliegende Schienen eingreifen.

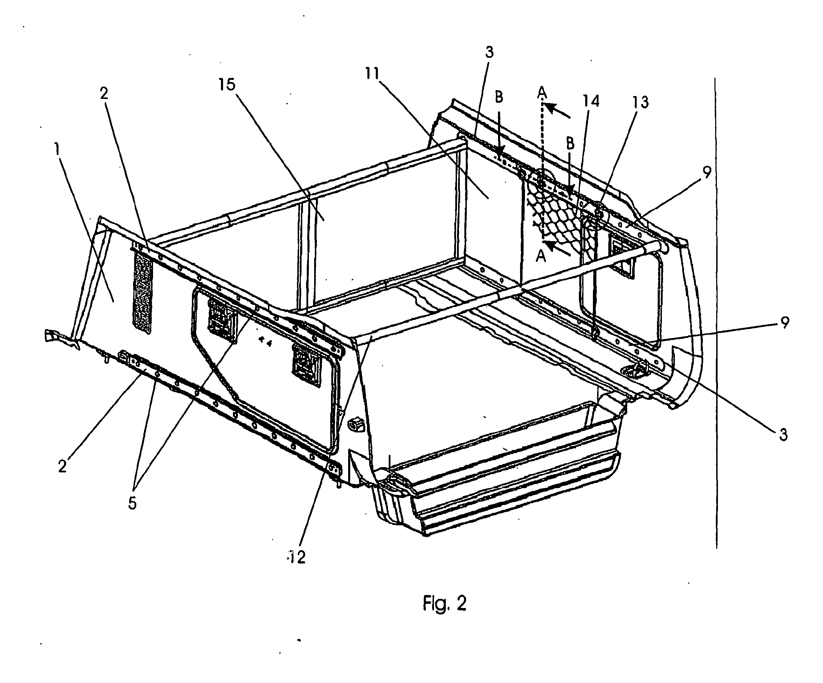

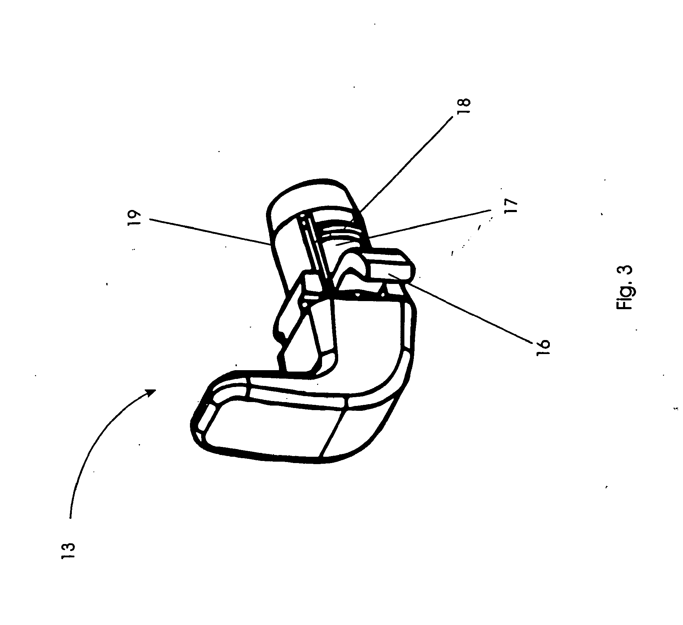

Wie anhand der Fig. 2 erkennbar ist, sind die Funktionsspuren 5 bis 7 rohbauseitig befestigt, indem sie mittels entsprechender Stützabschnitte 11 fest mit inneren Seitenteilen 10 der Rohbaukarosserie verbunden sind (Fig. 2 und 3). Diese Funktionsspuren, die zumindest teilweise in den Seitenverkleidungen 4 raümlich integriert sind, bleiben aber sichtbar. Andererseits, wenn die Schienen an der Innenraumverkleidung befestigt sind, die nicht sehr belastbar ist, tritt das Problem auf, dass die Zubehörteile nur kleine Kräfte auf die Schienen übertragen können. Beispielsweise können an an den Schienen befestigten Haken keine großen Lasten aufgehängt werden, bzw. auf an den Schienen befestigten Trennböden keine großen Lasten abgestellt werden, ohne die Innenraumverkleidung zu beschädigen.

Dokument JP-A-07052722 beschreibt ein Haltesystem zum Positionnieren die Obere und untere Verkleidungsteile eines Kofferraums zusammen mit einer Halterung (bracket 27) und offenbart den Oberbegriff des Anspruchs 1.

Es ist daher Aufgabe der vorliegenden Erfindung, ein Haltesystem für Zubehörteile im Inneren eines Fahrzeuges zu schaffen, das ohne Beschädigungen am Fahrzeug zu verursachen, mit hohen Kräften belastet werden kann.

Die Aufgabe wird gelöst durch ein Fahrzeug mit einer Karosserie und einer Innenraumverkleidung mit einem an der Karosserie befestigten, die Innenraumverkleidung an einer verdeckten Seite wenigstens lokal unterstützenden Trägerelement, an dem Halteeinrichtungen für Zubehörteile ausgebildet sind und bei dem die Innenraumverkleidung den Halteeinrichtungen zugeordnete Öffnungen aufweist, durch die ein im Innenraum des Fahrzeugs befindliches Zubehörteil an den Halteeinrichtungen befestigt ist.

Im Unterschied zum Stand der Technik gehört beim erfindungsgemäßen Fahrzeug die Innenraumverkleidung nicht zu den tragenden Teilen für die Zubehörteile und sie wird daher von an den Zubehörteilen angehängten Lasten nicht oder allenfalls geringfügig belastet.

Beim erfindungsgemäßen Fahrzeug werden die infolge der Belastung der Zubehörteile auftretenden Kräfte von dem Trägerelement auf die Karosserie übertragen, so dass an der von den Kräften verschonten Innenraumverkleidung keine Beschädigungen erfolgen können. Am Trägerelement ist auch die Innenraumverkleidung befestigt und wird vom Trägerelement unterstützt bzw. getragen.

Das Trägerelement ist vorzugsweise eine Metallschiene. Infolge der länglichen Ausdehnung einer solchen Metallschiene kann die Innenraumverkleidung einerseits an mehreren Stellen mit der Karosserie verbunden werden, andererseits bietet eine Metallschiene als Trägerelement die Möglichkeit, mehrere nebeneinanderliegende Halteeinrichtungen an ihr vorzusehen, wodurch sich für die Zubehörteile mehrere Positionierungsmöglichkeiten an der Metallschiene "bieten.

Bei einer bevorzugten Ausgestaltung des erfindungsgemäßen Fahrzeuges weist die Innenraumverkleidung eine Rinne auf, in die eine zweite Schiene gesteckt ist. Diese Schiene bewirkt eine Versteifung der Innenraumverkleidung an Stellen, wo befestigte Zubehörteile ein Hebelmoment auf sie ausüben könnten.

Bei der zweiten Schiene kann es sich um eine Kunststoffschiene handeln.

Vorteilhafterweise ist das Trägerelement an der Karosserie durch Abstandshalter gehalten. So kann eine gewünschte Orientierung des Trägerelements und damit der Innenraumverkleidung unabhängig von der Gestalt der von der Innenraumverkleidung verdeckten Karosserie eingestellt werden. Als Abstandshalter können beispielsweise auch mit der Karosserie an der Seitenwand verbundene und zur Halterung von Rückenlehnen der dem Laderaum benachbarten Rücksitze vorgesehene Halter dienen, wenn an diesen entsprechende Aufnahmen für die Trägerelemente ausgebildet sind. Der Vorteil dabei ist die zusätzliche Versteifung dieser Halter, wodurch die am Halter wirkenden Kräfte besser in die Karosseriestruktur eingeleitet werden.

Eine bevorzugte Ausgestaltung des erfindungsgemäßen Fahrzeuges weist paarweise gegenüberliegende, an verschiedenen Seitenwänden der Karosserie angeordnete Trägerelemente auf. Solche paarweise gegenüberliegenden Trägerelemente erlauben es z.B., stangenförmige Zubehörteile zwischen ihnen zu befestigen.

Bei einer weiteren bevorzugten Ausführungsform des erfindungsgemäßen Fahrzeuges sind parallel an einer Seitenwand der Karosserie angeordnete Trägerelemente vorgesehen. Solche Trägerelemente eignen sich beispielsweise zur Befestigung von vertikalen Trennwänden.

Bevorzugterweise umfasst jede Halteeinrichtung einen Durchbruch im Trägerelement. In diesen Durchbruch lassen sich Zubehörteile einstecken.

Vorteilhafterweise weist die in die Rinne eingesteckte zweite Schiene mit den Durchbrüchen des Trägerelements fluchtende Löcher auf, so dass die Zubehörteile sowohl durch die Schiene als auch durch das Trägerelement gesteckt werden können.

Bei einem Zubehörteil kann es sich um einen in einer Halteeinrichtung verrasteten Haken handeln. Es können aber auch andere Zubehörteile am Trennelement befestigt werden, wie beispielsweise Seitennetze, Stangen, Bodennetze oder horizontale oder vertikale Trennwände.

Vorteilhafterweise umfassen die Haken Betätigungselemente, mit denen die Verrastung bei Betätigung gelöst werden kann.

Wie oben bereits erwähnt, sind die Zubehörteile vorzugsweise in einem Laderaum angeordnet.

Im Folgenden wird eine bevorzugte Ausführung der Erfindung unter Bezugnahme auf Zeichnungen näher dargestellt. Dabei zeigen:
- Fig. 1: eine auseinandergezogene Darstellung einer Innenraumverkleidung eines Kraftfahrzeuges mit Trägerelementen;
- Fig. 2: eine räumliche Darstellung eines Laderaumes mit diversen Zubehörteilen;
- Fig. 3: einen am Trägerelement befestigbaren Haken;
- Fig. 4: einen Querschnitt durch einen am Trägerelement befestigten Haken;
- Fig. 5: eine Draufsicht auf zwei im Trägerelement befestigte Haken; und
- Fig. 6: einen Haken mit eingehaktem Netz.

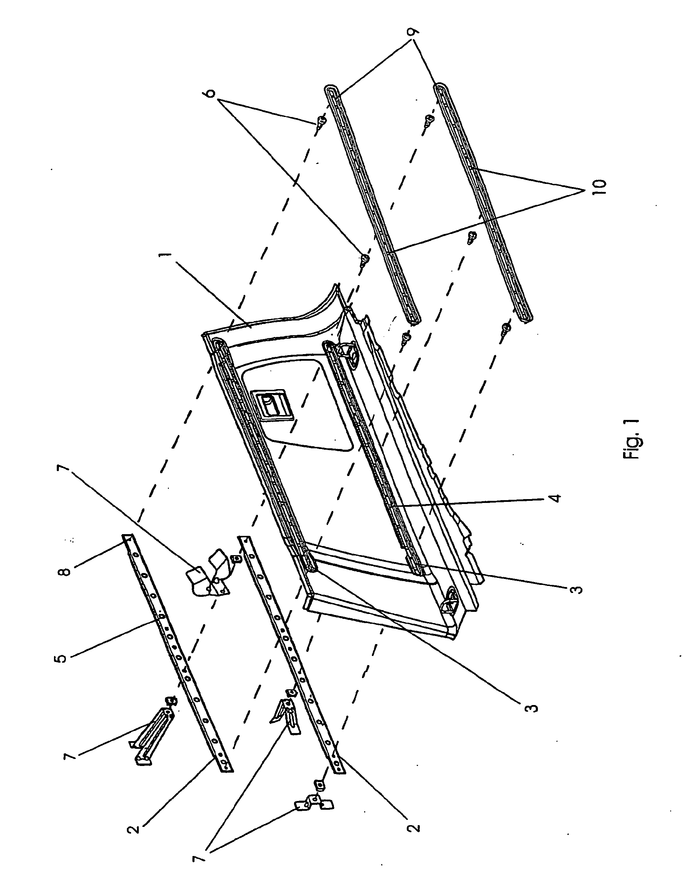

In Fig. 1 ist ein Verkleidungsteil 1 zur Verkleidung eines Kofferraumes in einem Kraftfahrzeug gezeigt. An einer einer in der Figur nicht gezeigten Karosserie zugewandten und somit im eingebauten Zustand des Verkleidungsteils 1 verdeckten Seite des Verkleidungsteils 1 sind zwei Metallschienen 2, die als Trägerelemente dienen, befestigt. Die Metallschienen 2 haben die Form von langgezogenen Streifen, wobei an den Längsenden der Streifen Abschnitte zur Versteifung abgewinkelt sind. An den Metallschienen 2 ist eine Reihe von Bohrungen 5 als Halteeinrichtungen für Zubehörteile vorgesehen.

An einer von der Karosserie abgewandten Seite des Verkleidungsteils 1 sind zwei horizontale Rinnen 3 eingetieft. An einer der Karosserie zugewandten Seite der Innenverkleidung stehen die Rinnen 3 vor und liegen an den Metallschienen 2 an. Am Boden der Rinnen 3 ist das Verkleidungsteil 1 mit gleichmäßig beabstandeten Bohrungen 4 versehen. Dabei sind die Rinnen 3 mit den Bohrungen 4 den Metallschienen 2 so zugeordnet, dass die Bohrungen 5 der Metallschienen 2 mit den Bohrungen 4 des Verkleidungsteils 1 fluchten.

Mittels Schrauben 6, die durch einzelne der zusammenfallenden Bohrungen 4 und 5 hindurchgreifen, sind die Metallschienen 2 zusammen mit dem mit ihnen verbundenen Verkleidungsteil 1 an der Karosserie befestigt. Zum Ausgleich von allfälligen Unebenheiten der Karosserie erfolgt die Verschraubung an zwischen der Karosserie und den Metallschienen 2 angeordneten Abstandshaltern 7. An Stellen, an denen die Metallschienen 2 direkt an der Karosserie anliegen, wie z.B. dem Verschraubpunkt 8, erfolgt die Verschraubung unmittelbar an der Karosserie, ohne dass dazwischengeschaltete Abstandshalter 7 notwendig wären.

Nach erfolgter Befestigung an der Karosserie werden Kunststoffschienen 9 in die Rinnen 3 gesteckt und darin verrastet. Die Kunststoffschienen 9 weisen aneinandergereihte Bohrungen 10 auf, die mit den Bohrungen 5 der Metallschienen und den Bohrungen 4 des Verkleidungsteils fluchten. Durch die fluchtenden Bohrungen 5, 4 und 10 lassen sich nunmehr verschiedene Zubehörteile einstecken und dadurch an den Metallschienen 2 befestigen. Dabei dienen die Kunststoffschienen 9 einerseits zur Verstärkung von die Zubehörteile tragenden Wandungen, die sich aus einer Bodenfläche der U-förmigen Metallschienen 2 und Bodenflächen der Kunststoffschienen 9 zusammensetzen und zum anderen zum Abdecken der Schrauben 6.

Fig. 2 zeigt in räumlicher Darstellung einen Innenraum eines Kofferraumes mit Verkleidungsteilen 1 und 11, sowie daran montierten Trägerelementen 2 und diversen an diesen befestigten Zubehörteilen 12, 13, 14 und 15. Zur besseren Übersicht ist der Innenraum ohne Fahrzeugkarosserie und Abstandshalter 7 dargestellt. Da die Verkleidungsteile 1 und 11 zur Verkleidung von sich gegenüberliegenden Karosseriewänden dienen, sind sie parallel zueinander ausgerichtet. In der Darstellung sind vom Verkleidungsteil 1 eine der Karosserie zugewandte Seite und vom Verkleidungsteil 11 eine von der Karosserie abgewandte und dem Innenraum des Kofferraumes zugewandte Seite zu sehen. Dabei sind die an der der Karosserie zugewandten Seite des Verkleidungsteils 11 angebrachten Metallschienen 2 zu erkennen. Dagegen sieht man an der dem Kofferinnenraum zugewandten Seite des Verkleidungsteiles 11 die in den Rinnen 3 eingerasteten Kunststoffschienen 9.

In die fluchtenden Bohrungen 4, 5 und 10, wobei die Bohrungen 4 in dieser Darstellung nicht gesehen werden können, sind diverse Zubehörteile 12, 13, 14 und 15 gesteckt. Als ein Beispiel für ein Zubehörteil ist eine Stange 12 eingezeichnet, die sich quer durch den Kofferraum erstreckt und die mit zwei gegenüberliegenden Enden in jeweils einer Metallschiene 2 befestigt ist, von denen eine am Verkleidungsteil 1 und die andere am Verkleidungsteil 11 angebracht ist und die sich paarweise gegenüberliegen.

Als weiteres Beispiel für ein Zubehörteil sind Haken 13 gezeigt, die in jeweils fluchtende Bohrungen 4, 5 und 10 gesteckt sind. Solche Haken 13 können wiederum zur Befestigung von verschiedenen anderen Zubehörteilen oder zur Aufhängung von Lasten dienen, wie am Beispiel eines Netzes 14 gezeigt ist. Das Netz 14 ist an vier Eckpunkten an vier Haken 13 eingehängt, die jeweils paarweise in einem von zwei parallel an dem Verkleidungsteil 11 angeordneten, vom Verkleidungsteil 11 in der Figur verdeckten und daher nicht sichtbaren Trägerelementen 2 eingehakt sind.

Schließlich ist eine den Kofferraum teilende Trennwand 15 als Zubehörteil gezeigt, die sowohl an zwei parallel am Verkleidungsteil 1 angeordneten Metallschienen 2, als auch an den zwei parallel am Verkleidungsteil 11 angeordneten, verdeckten Metallschienen 2 befestigt ist.

Fig. 3 zeigt einen der Haken 13 in räumlicher Darstellung. Der Haken 13 verfügt über einen hohlen Zapfen 19, mit dem er in die fluchtenden Bohrungen 4, 5 und 10 gesteckt wird. Seitlich am Zapfen 19 sind jeweils zwei gegenüberliegende Laschen 17 vorgesehen, von denen in der Fig. 3 nur eine gesehen werden kann. Die Laschen 17 sind an einem vom Betrachter abgewandten Ende einteilig mit dem Zapfen 19 verbunden. In einem mittigen Abschnitt der Lasche befindet sich ein Rastvorsprung 18, der nach Durchstecken durch die Bohrungen 4, 5, 10 hinter der Rückseite der Metallschiene eingreift. An einem dem Betrachter zugewandten Endabschnitt der Lasche 17 ist ein seitlich abgewinkeltes Betätigungselement 16 angeformt. Durch Zusammendrücken der Betätigungselemente 16 der zwei Laschen 17 kommen deren Rastvorsprünge 18 aus dem Eingriff an der Metallschiene 2 frei, und der Haken 13 kann leicht aus den Bohrungen 4, 5, 10 herausgezogen werden.

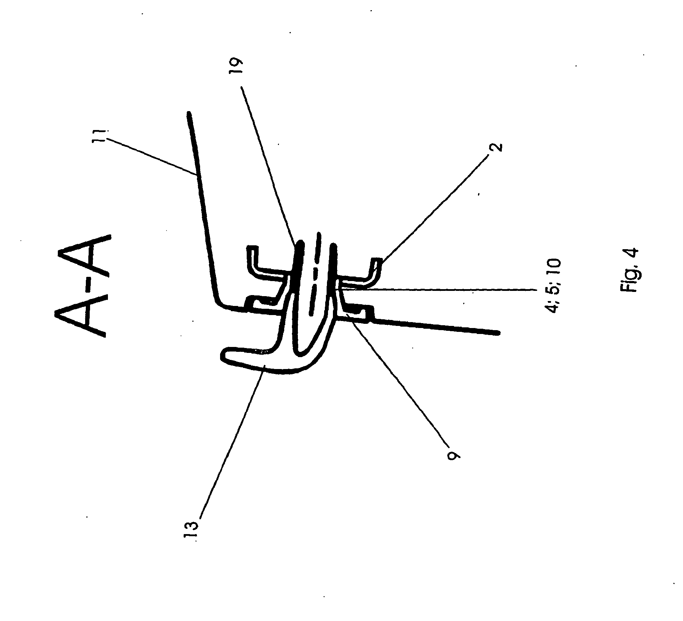

In Fig. 4 ist ein Querschnitt entlang der gestrichelten Linie A-A der Fig. 2 dargestellt. Dieser Schnitt verläuft durch einen in der Metallschiene 2 des Verkleidungsteils 11 eingerasteten Haken 13. In dieser Darstellung ist zu sehen, dass die Bodenflächen der Metallschiene 2 und der Kunststoffschiene 9 gegeneinander ausgerichtet sind und dadurch eine den Haken 13 haltende, verstärkte Wandung bilden. Dabei ragt der Zapfen 19 des Hakens 13 durch die Bohrungen 4, 5 und 10.

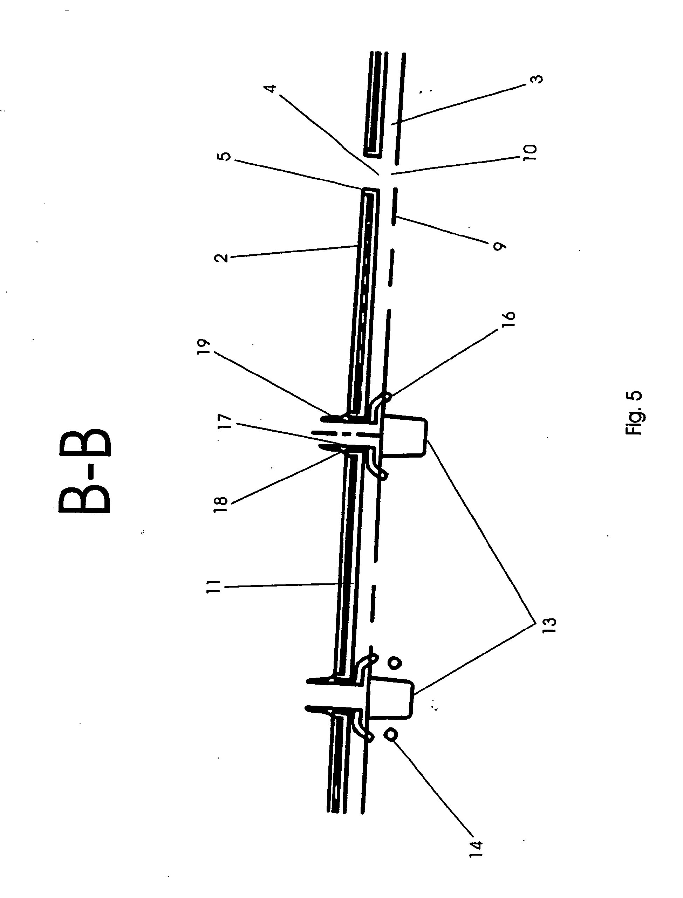

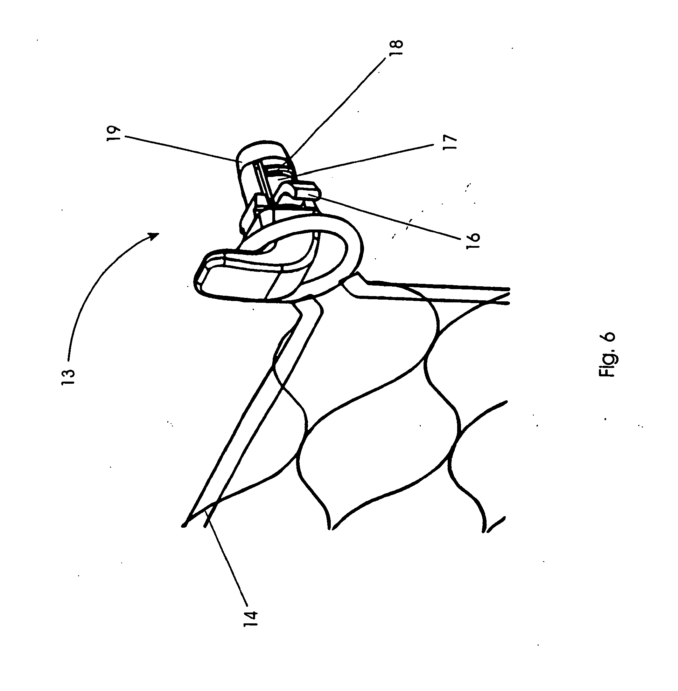

Fig. 5 zeigt einen Querschnitt entlang der gestrichelten Linie B-B der Fig. 2, der sich entlang der Rinne 3 durch zwei Haken 13 erstreckt. Man erkennt die Verrastung der Rastvorsprünge 18 an der Rückseite der Metallschiene 2. In dieser Darstellung ist auch zu sehen, wie die Betätigungselemente 16 auf der der Karosserie abgewandten Seite des Verkleidungsteils 11 in der Rinne 3 aufgenommen sind. Indem man die Betätigungselemente 16 eines Hakens 13 gleichzeitig eindrückt, werden die beweglichen Laschen 17 ins Innere des Zapfens 19 verbogen und die Verhakung der Rastvorsprünge 18 an der Metallschiene 2 wird aufgehoben, so dass der Haken 13 ohne Widerstand aus den fluchtenden Bohrungen 4, 5 und 10 herausgezogen werden kann. Somit lassen sich die Haken 13 beliebig an den Metallschienen in den dafür vorgesehenen Bohrungen 5 befestigen und wieder lösen. Sie können dabei zur Aufhängung von Kleidungsstücken oder anderen Zubehörteilen dienen, wie in Fig. 6 in vergrößerter Detaildarstellung der Aufhängung eines Netzes 14 an einem Haken 13 dargestellt ist.

### Bezugszeichenliste

- 1: Verkleidungsteil
- 2: Trägerelement / Metallschiene
- 3: Rinne
- 4: Bohrungen
- 5: Bohrungen
- 6: Schrauben
- 7: Abstandshalter
- 8: Verschraubpunkt
- 9: Kunststoffschienen
- 10: Bohrungen
- 11: Verkleidungsteil
- 12: Stange
- 13: Haken
- 14: Netz
- 15: Trennwand
- 16: Betätigungselement
- 17: Lasche
- 18: Rastvorsprung
- 19: Zapfen

## Patentansprüche

1. Fahrzeug mit einer Karosserie und einer Innenraumverkleidung (1; 11) mit einem an der Karosserie befestigten, die Innenraumverkleidung (1; 11) an einer verdeckten Seite wenigstens lokal unterstützenden Trägerelement (2), **dadurch gekennzeichnet daß**, an dem Trägerelement (2) Halteeinrichtungen (5) für Zubehörteile (12;13;14;15) gebildet sind, und bei dem Trägerelement (2) die Innenraumverkleidung (1; 11) den Halteeinrichtungen (5) zugeordnete Öffnungen (4) aufweiset, durch die ein im Innenraum des Fahrzeugs befindliches Zubehörteil (12; 13; 15) an den Halteeinrichtungen (5) befestigt ist.

2. Fahrzeug nach Anspruch 1, **dadurch gekennzeichnet, dass** das Trägerelement (2) eine Metallschiene ist.

3. Fahrzeug nach Anspruch 2, **gekennzeichnet durch** eine Rinne (3) in der Innenraumverkleidung (1; 11), in die eine zweite Schiene (9) gesteckt ist.

4. Fahrzeug nach Anspruch 3, **dadurch gekennzeichnet, dass** die zweite Schiene (9) eine Kunststoffschiene ist.

5. Fahrzeug nach einem der vorhergehenden Ansprüche, **dadurch gekennzeichnet, dass** das Trägerelement (2) an der Karosserie durch Abstandshalter (7) gehalten ist.

6. Fahrzeug nach einem der vorhergehenden Ansprüche, **gekennzeichnet durch** paarweise gegenüberliegende, an verschiedenen Seitenwänden der Karosserie angeordnete Trägerelemente (2).

7. Fahrzeug nach einem der vorhergehenden Ansprüche, **gekennzeichnet durch** parallel an einer Seitenwand der Karosserie angeordnete Trägerelemente (2).

8. Fahrzeug nach einem der vorhergehenden Ansprüche, **dadurch gekennzeichnet, dass** jede Halteeinrichtung (5) einen Durchbruch im Trägerelement (2) umfasst.

9. Fahrzeug nach den Ansprüchen 8 und 3 oder nach den Ansprüchen 8 und 4, **dadurch gekennzeichnet, dass** die eingesteckte zweite Schiene (9) mit den Durchbrüchen des Trägerelements (2) fluchtende Löcher (10) aufweist.

10. Fahrzeug nach einem der vorhergehenden Ansprüche, **dadurch gekennzeichnet, dass** ein Zubehörteil ein in einer Halteeinrichtung (5) verrasteter Haken (13) ist.

11. Fahrzeug nach Anspruch 10, **dadurch gekennzeichnet, dass** die Haken (13) Betätigungselemente (10) umfassen, mit denen die Verrastung bei Betätigung gelöst wird.

12. Fahrzeug nach einem der vorhergehenden Ansprüche, **dadurch gekennzeichnet, dass** die Zubehörteile (12; 13; 14; 15) in einem Laderaum angeordnet sind.

13. Fahrzeug nach Anspruch 5, **dadurch gekennzeichnet, dass** als Abstandshalter (7) ein mit der Karosserie an der Seitenwand verbundener und zur Halterung einer Rückenlehne eines dem Laderaum benachbarten Rücksitzes ausgebildeter Halter vorgesehen ist.

## Claims

1. A vehicle, comprising a body and interior cladding (1; 11) with a support element (2) which is fastened to the body and supports the interior cladding (1; 11) at least locally on a covered side, **characterized in that** holding devices (5) for accessory parts (12; 13; 14; 15) are formed on the support element (2) and the interior cladding (1; 11) comprises openings (4) associated with the holding devices (5) in the support element (2), by means of which an accessory part (12; 13; 15) which is disposed in the interior of the vehicle is fastened to the holding devices (5).

2. A vehicle according to claim 1, **characterized in that** the support element (2) is a metal rail.

3. A vehicle according to claim 2, **characterized by** a groove (3) in the interior cladding (1; 11), into which a second rail (9) is inserted.

4. A vehicle according to claim 3, **characterized in that** the second rail (9) is a plastic rail.

5. A vehicle according to one of the preceding claims, **characterized in that** the support element (2) is held on the body by spacers (7).

6. A vehicle according to one of the preceding claims, **characterized by** support elements (2) which are opposite of one another in pairs and are arranged on different side walls of the body.

7. A vehicle according to one of the preceding claims, **characterized by** support elements (2) which are arranged parallel on a side wall of the body.

8. A vehicle according to one of the preceding claims, **characterized in that** each holding device (5) comprises a breakthrough in the support element (2).

9. A vehicle according to claims 8 and 3 or according to claims 8 and 4, **characterized in that** the inserted second rail (9) with the breakthroughs of the support element (2) comprises aligned holes (10).

10. A vehicle according to one of the preceding claims,
**characterized in that** an accessory part is a hook (13) latched into a holding device (5).

11. A vehicle according to claim 10, **characterized in that** the hooks (13) comprise actuating elements (10), with which the latched connection is released upon actuation.

12. A vehicle according to one of the preceding claims,
**characterized in that** the accessory parts (12; 13; 14; 15) are arranged in a storage compartment.

13. A vehicle according to claim 5, **characterized in that** a holder is provided as a spacer (7) which is connected to the body on the side wall and is arranged for holding a backrest of a rear seat adjacent to the storage compartment.

## Revendications

1. Véhicule avec une carrosserie et un habillage de l'intérieur (1 ; 11) avec un élément de support (2) fixé à la carrosserie et soutenant au moins localement l'habillage de l'intérieur (1 ; 11) sur un côté caché, **caractérisé en ce que** des dispositifs de maintien (5) pour des accessoires (12 ; 13 ; 14 ; 15) sont formés sur l'élément de support (2) et l'habillage de l'intérieur (1 ; 11) présente au niveau de l'élément de support (2) des ouvertures (4) associées aux dispositifs de maintien (5), à travers lesquelles un accessoire (12 ; 13 ; 15) situé dans l'intérieur du véhicule est fixé aux dispositifs de maintien (5).

2. Véhicule selon la revendication 1, **caractérisé en ce que** l'élément de support (2) est un rail métallique.

3. Véhicule selon la revendication 2, **caractérisé en ce qu'**il comporte une gouttière (3) dans l'habillage de l'intérieur (1 ; 11), dans laquelle un deuxième rail (9) est enfoncé.

4. Véhicule selon la revendication 3, **caractérisé en ce que** le deuxième rail (9) est un rail en matière plastique.

5. Véhicule selon l'une des revendications précédentes, **caractérisé en ce que** l'élément de support (2) est retenu sur la carrosserie par des cales d'écartement (7).

6. Véhicule selon l'une des revendications précédentes, **caractérisé en ce qu'**il comporte des éléments de support (2) se faisant face par paires et disposés sur différentes parois latérales de la carrosserie.

7. Véhicule selon l'une des revendications précédentes, **caractérisé en ce qu'**il comporte des éléments de support (2) disposés parallèlement sur une paroi latérale de la carrosserie.

8. Véhicule selon l'une des revendications précédentes, **caractérisé en ce que** chaque dispositif de maintien (5) comporte une traversée dans l'élément de support (2).

9. Véhicule selon les revendications 8 et 3 ou selon les revendications 8 et 4, **caractérisé en ce que** le deuxième rail (9) enfoncé présente des trous (10) alignés sur les traversées de l'élément de support (2).

10. Véhicule selon l'une des revendications précédentes, **caractérisé en ce qu'**un accessoire est un crochet (13) qui s'engage dans un dispositif de maintien (5).

11. Véhicule selon la revendication 10, **caractérisé en ce que** les crochets (13) comportent des éléments d'actionnement (10) qui permettent de défaire l'engagement lorsqu'ils sont actionnés.

12. Véhicule selon l'une des revendications précédentes, **caractérisé en ce que** les accessoires (12 ; 13 ; 14 ; 15) sont disposés dans un compartiment de chargement.

13. Véhicule selon la revendication 5, **caractérisé en ce que** la cale d'écartement (7) prévue est une fixation reliée à la carrosserie sur la paroi latérale et conformée pour retenir un dossier d'un siège arrière voisin du compartiment de chargement.
